# EUROPÄISCHE PATENTSCHRIFT

(11) **EP 3 120 020 B1**
(45) Veröffentlichungstag und Bekanntmachung des Hinweises auf die Patenterteilung: **29.08.2018**
(21) Anmeldenummer: 15709491.3
(22) Anmeldetag: 12.03.2015
(51) Int. Cl.: F03D 1/06, F03D 80/40, F03D 7/04, F03D 17/00

(54) **WINDENERGIEANLAGEN-ROTORBLATT UND HEIZEINHEIT FÜR EIN WINDENERGIEANLAGEN-ROTORBLATT**
WIND-TURBINE ROTOR BLADE AND HEATING UNIT FOR A WIND-TURBINE ROTOR BLADE
PALE DE ROTOR D'ÉOLIENNE ET UNITÉ DE CHAUFFAGE D'UNE PALE DE ROTOR D'ÉOLIENNE

(30) Priorität: 17.03.2014 DE 102014204857
(43) Veröffentlichungstag der Anmeldung: 25.01.2017
(73) Patentinhaber: Wobben Properties GmbH, 26607 Aurich (DE)
(72) Erfinder: STOLTENJOHANNES, Jürgen, 26605 Aurich (DE)
(74) Vertreter: Eisenführ Speiser
(86) Internationale Anmeldenummer: PCT/EP2015/055232
(87) Internationale Veröffentlichungsnummer: WO 2015/140053

(56) Entgegenhaltungen:
- WO-A2-2012/131032
- DE-A1-102006 041 461
- US-A1- 2007 098 551
- US-A1- 2009 262 331

## Beschreibung

Die vorliegende Erfindung betrifft ein Windenergieanlagen-Rotorblatt und eine Heizeinheit für ein Windenergieanlagen-Rotorblatt.

Die Rotorblätter einer Windenergieanlage sind den Naturgewalten ungeschützt ausgesetzt. Sowohl die Rotorblätter als auch die gesamte Windenergieanlage müssen in einem weiten Temperaturbereich arbeiten können. Insbesondere bei Temperaturen um oder unter dem Gefrierpunkt kann es jedoch zu einer Vereisung der Rotorblätter kommen. Bislang sind einige Verfahren bekannt, um die Rotorblätter zu heizen (beispielsweise durch eine Luftheizung) und um die Rotorblätter zu enteisen bzw. um präventiv eine Vereisung zu vermeiden.

DE 10 2011 086 603 A1 zeigt ein Windenergieanlagen-Rotorblatt und ein Verfahren zum Enteisen eines Windenergieanlagen-Rotorblattes mittels einer Luftheizung.

Das deutsche Patent- und Markenamt hat in der prioritätsbegründenden Patentanmeldung die folgenden Dokumente recherchiert: DE 10 2011 086 603 A1, DE 100 16 259 C2, DE 10 2004 042 423 A1, JP 2001-122533 A, EP 2 386 750 A1, DE 10 2009 039 490 A1.

Alternativ dazu können elektrisch betriebene Heizmatten verwendet werden, die mindestens eine elektrische Leitung als Heizelement aufweisen. Die Verwendung von elektrischen Leitungen in der Heizmatte, welche dann in dem Rotorblatt platziert wird oder in dem Rotorblatt integriert ist, ist jedoch nachteilig im Hinblick auf eine Gefährdung durch einen Blitzeinschlag.

Das Dokument US2009/262331 offenbart ein Rotorblatt einer Windenergieanlage, wobei Lichtwellenleiter in der Struktur des Rotorblatts eingebettet sind. Bei diesem bekannten System wird eine Heizung des Rotorblatts nicht offenbart. Die Lichtwellenleiter im Rotorblatt werden als Risserfassungselemente benutzt.

Es ist daher eine Aufgabe der vorliegenden Erfindung, ein Windenergieanlagen-Rotorblatt sowie eine Heizeinheit für ein Windenergieanlagen-Rotorblatt vorzusehen, welche die Gefahr eines Blitzeinschlages reduziert.

Diese Aufgabe wird durch ein Windenergieanlagen-Rotorblatt nach Anspruch 1 sowie durch eine Heizeinheit für ein Windenergieanlagen-Rotorblatt nach Anspruch 11 gelöst.

Somit wird ein Windenergieanlagen-Rotorblatt mit einer Heizeinheit zum Heizen des Rotorblattes vorgesehen. Die Heizeinheit weist mindestens einen Lichtwellenleiter als Heizelement auf. Die Heizeinheit weist wenigstens einen Anschluss für eine Energie- bzw. Lichtquelle bzw. einen Sender auf, welche Energie in Form von elektromagnetischen Strahlen oder Wellen, z. B. Licht, durch den Lichtwellenleiter senden kann. Durch die Dämpfungsverluste des Lichtwellenleiters werden die elektromagnetischen Wellen in Wärme umgewandelt.

Optional ist die Dämpfung des Lichtwellenleiters so gewählt, dass die über die Lichtquelle oder die Energiequelle eingekoppelten elektromagnetischen Strahlen oder Wellen, z. B. Licht, möglichst gleichmäßig über die Länge des Lichtwellenleiters in Wärme umgewandelt werden.

Gemäß einem Aspekt der vorliegenden Erfindung ist eine Heizeinheit in dem Rotorblatt integriert oder auf dem Rotorblatt angebracht.

Die Heizeinheit kann auch als eine Matte, beispielsweise eine Silikonmatte, ausgestaltet sein, welche eine Mehrzahl von Lichtwellenleitern aufweist, welche aufgrund ihrer Dämpfung durch sie hindurch geleitete elektromagnetische Wellen, z. B. Licht, in Wärme umwandeln. Diese Wärme kann dann zum Erwärmen bzw. Heizen eines Rotorblatts verwendet werden.

Somit entsprechen die erfindungsgemäß verwendeten Lichtwellenleiter nicht notwendigerweise den üblicherweise bei der optischen Datenkommunikation verwendeten Lichtwellenleitern, die so ausgestaltet sind, dass die Dämpfung minimiert wird. Während bei der optischen Datenkommunikation die Dämpfung unerwünscht ist, ist die Dämpfung der erfindungsgemäßen Lichtwellenleiter erwünscht, um das Rotorblatt beheizen zu können.

Die Erfindung betrifft ebenfalls eine Heizeinheit für ein Windenergieanlagen-Rotorblatt. Die Heizeinheit weist einen Eingangsanschluss zum Einkoppeln von elektromagnetischen Wellen, z. B. Licht, sowie mindestens einen Lichtwellenleiter als Heizelement auf. Die Heizeinheit kann optional als eine Matte mit einem Eingangsanschluss ausgestaltet sein. Somit kann die Matte in dem Rotorblatt integriert bzw. an seiner Innenseite angebracht werden. Die Matte kann in das Material des Rotorblattes integriert werden.

Optional kann die Heizeinheit möglichst nahe an der äußeren Oberfläche des Rotorblattes angeordnet sein, um insbesondere die äußeren Bereich heizen zu können.

Gemäß einem Aspekt der vorliegenden Erfindung ist die Dämpfung so ausgewählt, dass es zu einer gleichmäßigen Wärmeabgabe entlang der Länge des mindestens einen Lichtwellenleiters kommen kann.

Optional kann ein Gitter aus Lichtwellenleitern in dem Rotorblatt bzw. in der Heizeinheit vorgesehen sein.

Die erfindungsgemäße Lösung ist vorteilhaft, weil somit sowohl Blitzeinschläge als auch eine statische elektrische Aufladung vermieden bzw. reduziert werden können. Die Lichtwellenleiter dienen typischerweise der Übertragung von Licht und bestehen aus Fasern wie beispielsweise Quarzglas oder Kunststoff (polymere optische Fasern). Somit lassen sich die Lichtwellenleiter sehr gut in die übliche Struktur des Blattes beispielsweise bestehend aus GFK oder CFK integrieren. Des Weiteren verhalten sich die Lichtwellenleiter unkritisch bezüglich einer Dauerfestigkeit.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2A: zeigen jeweils eine schematische Ansicht eines Rotorblattes gemäß
- bis 2B: einem ersten Ausführungsbeispiel der Erfindung,
- Fig. 3: zeigt einen schematischen Querschnitt eines Rotorblattes gemäß einem zweiten Ausführungsbeispiel, und
- Fig. 4: zeigt eine schematische Ansicht eines Rotorblattes gemäß einem dritten Ausführungsbeispiel.

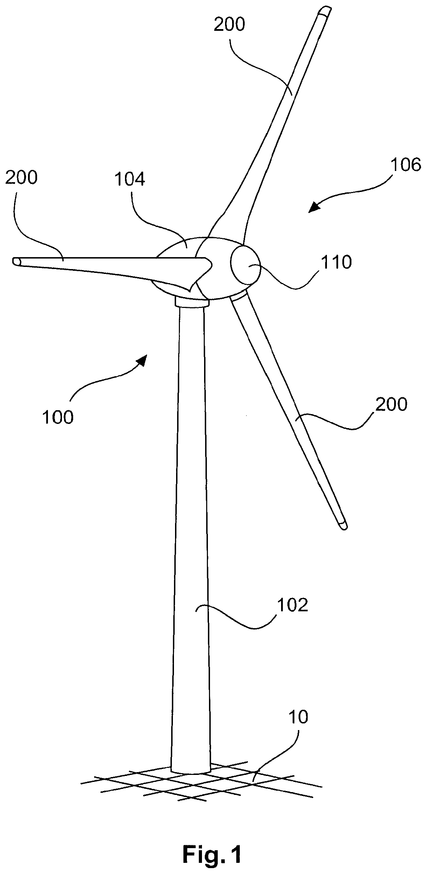

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

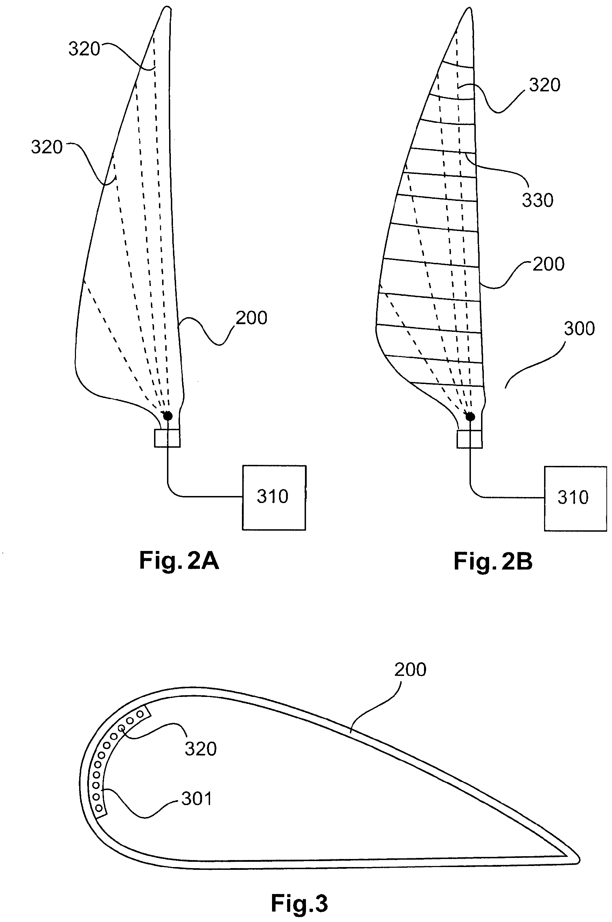

Fig. 2A zeigt eine schematische Darstellung eines Rotorblattes 30 der Windenergieanlage von Fig. 1 zusammen mit einer Heizeinheit.

Fig. 2A und 2B zeigen jeweils eine schematische Ansicht eines Windenergieanlagen-Rotorblattes mit einer Heizeinheit 300 gemäß einem ersten Ausführungsbeispiel der Erfindung. Die Heizeinheit 300 weist einen Sender oder eine Einkopplungseinheit 310 zum Bereitstellen von Energie (elektromagnetische Strahlung oder Wellen) und mindestens einen Lichtwellenleiter 320 auf, welcher sich entlang der Länge des Rotorblattes 200 erstreckt. Die von dem Sender bzw. der Einkopplungseinheit 310 zur Verfügung gestellten elektromagnetischen Wellen, z. B. Licht, werden in ein erstes Ende der Lichtwellenleiter 320 eingekoppelt und werden durch die Lichtwellenleiter 320 geleitet. Durch die Dämpfung der Lichtwellenleiter können die elektromagnetischen Wellen, z. B. Licht, in Wärme umgewandelt werden.

In Fig. 2B weist die Heizeinheit 300 einen Sender 310 und eine Lichtwellenleiter-Gitterstruktur bestehend aus Lichtwellenleitern 320, welche sich im Wesentlichen entlang der Länge des Rotorblattes erstrecken, sowie aus Lichtwellenleitern 330, welche sich quer zur Längsrichtung des Rotorblattes erstrecken, auf. Die Lichtwellenleiter 320, 300 sind an eine Energiequelle bzw. einen Sender bzw. eine Einkopplungseinheit 310 angeschlossen. Die Dämpfung der Lichtwellenleiter ist so ausgestaltet, dass zumindest ein Teil des eingekoppelten Lichts in Wärme umgewandelt wird und zum Heizen des Rotorblattes verwendet werden kann.

Gemäß der Erfindung kann eine Einkopplungseinheit oder mehrere Einkopplungseinheiten zum Einkoppeln von Licht vorgesehen sein. Vorzugsweise ist die Einkopplungseinheit im Bereich der Rotorblattwurzel oder im Bereich der Rotorblattnabe vorgesehen. Optional können die Lichtwellenleiter möglichst nahe an der äußeren Oberfläche des Rotorblattes angeordnet sein, um insbesondere diesen Bereich zu erwärmen.

Die Erfindung beruht auf dem Gedanken, Lichtwellenleiter als Heizelemente für eine Heizeinheit eines Rotorblattes einzusetzen. Dies scheint zunächst kontraproduktiv zu sein, da Lichtwellenleiter typischerweise so ausgestaltet sind, dass die Dämpfung minimiert ist. Die Erfindung betrifft jedoch den Gedanken, die Dämpfung der Lichtwellenleiter so auszugestalten, dass ein Teil der eingekoppelten Lichtmenge in Wärme umgewandelt wird und somit das Rotorblatt erwärmen kann.

Fig. 3 zeigt einen schematischen Querschnitt eines Rotorblattes gemäß einem zweiten Ausführungsbeispiel. Das Rotorblatt 200 weist an seiner Innenseite eine Heizeinheit 300 auf. Die Heizeinheit 300 kann als Heizmatte 301 ausgestaltet sein, welche z. B. an der inneren Oberfläche des Rotorblattes 200 angebracht oder befestigt werden kann. Alternativ bzw. zusätzlich dazu können die Heizmatten bei der Produktion des Rotorblattes in das Material des Rotorblattes integriert werden. Die Heizmatte 301 kann eine Mehrzahl von Lichtwellenleitern 320 aufweisen. Optional kann jede Heizmatte 301 eine eigene Einkopplungseinheit oder Sender 310 zum Einkoppeln von Licht in die Lichtwellenleiter aufweisen. Die Heizmatte kann als Silikonmatte ausgestaltet sein.

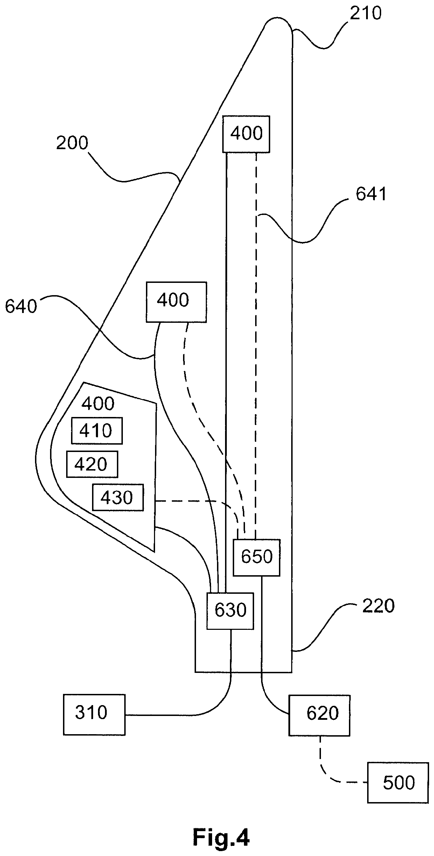

Fig. 4 zeigt eine schematische Ansicht eines Rotorblatts gemäß einem dritten Ausführungsbeispiel. Das Rotorblatt 200 weist eine Rotorblattspitze 210 und eine Rotorblattwurzel 220 auf. Das Rotorblatt 200 ist vorzugsweise aus einem Faserverbundmaterial wie beispielsweise GFK oder CFK hergestellt. Das Rotorblatt 200 weist mehrere Sensoren oder Messtechnikeinheiten 400 zum Messen von physikalischen Größen auf. Im Bereich der Rotorblattwurzel 220 ist eine Einkopplungseinheit 630 vorgesehen. Ebenfalls im Bereich der Rotorblattwurzel ist ein optischer Empfänger 650 vorgesehen. Der optische Empfänger 650 ist mit einer Auswerteeinheit 620 gekoppelt. Die Einkopplungseinheit 630 ist mit einer Energieversorgung 610 gekoppelt. Die Sensoren oder die Messtechnikeinheiten 400 sind über Lichtwellenleiter 640, 641 mit dem Empfänger 650 und der Einkopplungseinheit 630 gekoppelt. In Fig. 4 sind hierzu unterschiedliche Lichtwellenleiter 640, 641 dargestellt. Alternativ dazu kann jedoch auch lediglich ein Lichtwellenleiter 640 von der Einkopplungseinheit 630 zu dem Sensor oder der Messtechnikeinheit 400 vorgesehen werden. Dieser Lichtwellenleiter 640 dient dann sowohl der Energieübertragung von der Einkopplungseinheit 630 an die Sensoren oder Messtechnikeinheiten 400 als auch der Übertragung von Daten von den Sensoren 400 an den Empfänger 650.

Der Sensor oder die Messtechnikeinheit 400 weist eine Entkopplungseinheit 410 zum Empfangen der elektromagnetischen Wellen, z.B. in Form von Licht, über den Lichtwellenleiter 640 und zum Umwandeln dieser elektromagnetischen Wellen in elektrische Energie auf. Die Funktion der Entkopplungseinheit 410 entspricht somit im Wesentlichen der Funktion einer Photovoltaikeinheit bzw. einer photoelektrischen Einheit, da diese Einheit die empfangenen elektromagnetischen Wellen, z.B. Licht, in elektrische Energie umwandelt. Der Sensor bzw. die Messtechnikeinheit weist einen entsprechenden Sensor 420 und einen optischen Sender 430 auf. Der Sender 430 kann die elektrischen Ausgangssignale des Sensors 420 in optische Signale umwandeln und kann diese Signale über den Lichtwellenleiter 640 bzw. 641 an einen optischen Empfänger 650 weiterleiten.

Damit werden die Lichtwellenleiter 640 in der Richtung von der Einkopplungseinheit 630 zu den Sensoren oder den Messtechnikeinheiten zur Energieversorgung und in der Richtung von den Sensoren oder der Messtechnikeinheit zu dem Empfänger 650 zur Datenübertragung der Ausgangssignale der Sensoren verwendet.

Der Empfänger 650 empfängt die optischen Signale von den optischen Sendern 430 über die Lichtwellenleiter 640, 641 und wandelt diese Signale in elektrische Signale um. Die elektrischen Signale werden dann einer Auswerteeinheit 620 zugeführt.

Die Auswerteeinheit 620 kann die ausgewerteten Messsignale der Sensoren und/oder der Messtechnikeinheiten 400 an eine zentrale Steuerung 500 weiterleiten, die in Abhängigkeit der erfassten Messsignale in den Betrieb der Windenergieanlage eingreifen kann. Dies kann beispielsweise durch Änderung des Pitchwinkels der Windenergieanlagen, durch Änderung des Azimutwinkels oder dergleichen erfolgen.

Gemäß einem Aspekt der vorliegenden Erfindung kann die Einkopplungseinheit 630 und/oder der Empfänger 650 ebenfalls einen optischen Sender aufweisen, mittels welchem Datensignale an die Sensoren 400 übertragen werden können. Diese Datenkommunikation kann beispielsweise zur Steuerung der Sensoren und/oder der Messtechnikeinheiten 400 erfolgen.

Die Einkopplungseinheit 610 und/oder die Auswerteeinheit 620 können im Bereich der Rotorblattwurzel 220 oder im Bereich einer Nabe der Windenergieanlage vorgesehen sein.

Mit der Einkopplungseinheit 610 kann beispielsweise elektrische Energie in optische Signale und damit optische Energie umgewandelt werden. Diese optische Energie kann mittels der Lichtwellenleiter 630 an die Sensoren und/oder Messtechnikeinheiten übertragen werden. In den Sensoren und/oder Messtechnikeinheiten kann die eingekoppelte optische Energie mittels der Entkopplungseinheit 410 in elektrische Energie umgewandelt werden, welche dann zur Energieversorgung der Sensoren 400 verwendet werden kann. Optional können die Sensoren 400 über einen Energiespeicher beispielsweise in Form von mindestens einem Kondensator verfügen.

Der Sender 430 ist dazu ausgestaltet, die elektrischen Ausgangssignale der Sensoren 420 in optische Signale mit definierten Amplituden und/oder Frequenzen umzuwandeln und diese optischen Signale dann über die Lichtwellenleiter an den optischen Empfänger 650 zu übertragen.

In der Auswerteeinheit 620 können die Messsignale der Sensoren und/oder der Messtechnikeinheiten 400 beispielsweise einer Spektrumsanalyse unterzogen werden.

Die Sensoren 400 können beispielsweise Dehnungsmessstreifen als Sensoren 420 aufweisen.

Mit einem erfindungsgemäßen Rotorblatt, dass eine Energieübertragung für die Sensoren und/oder Messtechnikeinheiten basierend auf Lichtwellenleitern aufweist, wird die Gefahr von Blitzeinschlägen und/oder statischen Aufladungen wesentlich reduziert, weil keine elektrischen Leitungen vorhanden sind.

Da die Lichtwellenleiter typischerweise Glasfasern darstellen, ist eine Integration dieser Lichtwellenleiter in das Material des Rotorblattes unkritisch. Insbesondere weisen die Lichtwellenleiter und die Faserverbundwerkstoffe, die typischerweise bei Rotorblättern verwendet werden, den gleichen Dehnungskoeffizienten auf.

Gemäß der Erfindung kann eine Einkopplungseinheit oder mehrere Einkopplungseinheiten zum Einkoppeln von Licht vorgesehen sein. Vorzugsweise ist die Einkopplungseinheit im Bereich der Rotorblattwurzel oder im Bereich der Rotorblattnabe vorgesehen.

Die physikalischen Größen, die durch die Sensoren 400 gemessen werden können, sind z. B. Beschleunigung, Geschwindigkeit, Blattbeanspruchung, Blattspannung, Temperatur, Luftdruck, Luftfeuchtigkeit, Blattbiegung, Drehmoment etc.

Die Lichtwellenleiter gemäß dem dritten Ausführungsbeispiel können wie die Lichtwellenleiter in dem ersten oder zweiten Ausführungsbeispiel neben der Energieübertragung und Datenübertragung auch zum Heizen oder Erwärmen des Rotorblattes verwendet werden. Dazu muss lediglich die Entkopplungseinheit 310 gemäß dem ersten oder zweiten Ausführungsbeispiel vorgesehen werden.

Alternativ dazu können die Lichtwellenleiter 320, 330 gemäß Fig. 2A und 2B zur Energie- und/oder Datenübertragung verwendet werden.

## Patentansprüche

1. Windenergieanlagen-Rotorblatt (200), mit
mindestens einer Heizeinheit (300) zum Heizen zumindest eines Abschnittes des Rotorblattes (200),
wobei die Heizeinheit (300) mindestens einen Lichtwellenleiter (320, 330) als Heizelement aufweist, wenn Energie in Form von elektromagnetischen Wellen oder Strahlen in den Lichtwellenleiter (320, 330) eingekoppelt wird und aufgrund einer Dämpfung der Lichtwellenleiter (320, 330) in Wärme umgewandelt wird,
wobei eine Dämpfung der Lichtwellenleiter (320, 330) so eingestellt ist, dass zumindest ein Teil der eingekoppelten Energie der elektromagnetischen Wellen, insbesondere Licht, in Wärme umgewandelt wird, um das Rotorblatt (200) aufzuheizen.

2. Windenergieanlagen-Rotorblatt (200) nach Anspruch 1, wobei
die Heizeinheit (300) mindestens einen Sender oder eine Einkopplungseinheit (310) zum Bereitstellen und/oder Einkoppeln von elektromagnetischen Wellen, insbesondere Licht, für die Lichtwellenleiter (320, 330) aufweist.

3. Windenergieanlagen-Rotorblatt nach einem der Ansprüche 1 bis 2, wobei
die mindestens eine Heizeinheit (300) in dem Rotorblatt (200) integriert ist oder auf das Rotorblatt (200) aufgebracht ist.

4. Windenergieanlagen-Rotorblatt nach einem der Ansprüche 1 bis 3, wobei
die Heizeinheit (350) mindestens eine Heizmatte (350) aufweist, in welcher mindestens ein Lichtwellenleiter (320, 330) vorgesehen ist.

5. Windenergieanlagen-Rotorblatt nach einem der Ansprüche 1 bis 4, mit
einer Rotorblattspitze (210) und einer Rotorblattwurzel (220),
mindestens einer Messtechnikeinheit (400) zum Durchführen von Messungen, und
einer Energieübertragungseinheit (600) zur Energieversorgung der mindestens einen Messtechnikeinheit (400),
wobei die Energieversorgungseinheit (600) eine Mehrzahl von Lichtwellenleitern (320, 330) zur Übertragung der Energie an die mindestens eine Messtechnikeinheit (400) aufweist.

6. Windenergieanlagen-Rotorblatt nach Anspruch 5, wobei
eine Einkopplungseinheit (600) im Bereich der Rotorblattwurzel (220) vorgesehen ist und zum Umwandeln von elektrischer Energie in optische Energie vorgesehen ist, wobei die optische Energie in mindestens einen Lichtwellenleiter (640, 641) eingekoppelt wird,
wobei die Messtechnikeinheiten (400) dazu ausgestaltet sind, über die Lichtwellenleiter (640, 641) eingekoppelte optische Energie in elektrische Energie umzuwandeln.

7. Windenergieanlagen-Rotorblatt nach Anspruch 5 oder 6, wobei
die Messtechnikeinheiten (400) jeweils mindestens einen Sensor (420) zum Messen von physikalischen Größen und einen Sender (430) aufweisen, der dazu geeignet ist, die Ausgangssignale des Sensors (420) in optische Signale umzuwandeln und über die Lichtwellenleiter (640, 641) zu übertragen.

8. Windenergieanlage, mit
mindestens einem Rotorblatt nach einem der Ansprüche 5 bis 7, und
einer Auswerteeinheit (620) zum Auswerten der empfangenen Signale der Messtechnikeinheiten (400).

9. Windenergieanlage nach Anspruch 8, ferner mit
einer zentralen Steuereinheit (500), welche dazu ausgestaltet ist, in den Betrieb der Windenergieanlage in Abhängigkeit der von der Auswerteeinheit (620) ausgewerteten Signale der mindestens einen Messtechnikeinheit (400) einzugreifen.

10. Windenergieanlage, mit
mindestens einem Windenergieanlagen-Rotorblatt nach einem der Ansprüche 1 bis 7.

11. Heizeinheit für ein Windenergieanlagen-Rotorblatt zum Beheizen zumindest eines Abschnittes des Rotorblattes, mit
mindestens einem Lichtwellenleiter (320, 330) als Heizelement, wenn Energie in Form von elektromagnetischen Wellen in den mindestens einen Lichtwellenleiter (320, 330) eingekoppelt wird und aufgrund einer Dämpfung der Lichtwellenleiter (320, 330) in Wärme umgewandelt wird,
wobei eine Dämpfung der Lichtwellenleiter (320, 330) so eingestellt ist, dass zumindest ein Teil der eingekoppelten Energie der elektromagnetischen Wellen, insbesondere Licht, in Wärme umgewandelt wird, um das Rotorblatt (200) aufzuheizen.

12. Verwendung von Lichtwellenleitern als Heizelement in einer Heizeinheit zum Heizen eines Windenergieanlagen-Rotorblattes.

13. Verfahren zum Heizen eines Windenergieanlagen-Rotorblattes, das mindestens einen Lichtwellenleiter (320, 330) aufweist, mit den Schritten:
Einkoppeln von Energie in Form von elektromagnetischen Wellen oder Strahlen in dem mindestens einen Lichtwellenleiter (320, 330), wobei aufgrund einer Dämpfung in dem Lichtwellenleiter (320, 330) die elektromagnetischen Wellen in Wärme umgewandelt werden.

## Claims

1. Wind turbine rotor blade (200), with
at least one heating unit (300) for heating at least a portion of the rotor blade (200),
the heating unit (300) having at least one optical waveguide (320, 330) as a heating element when energy in the form of electromagnetic waves or beams is coupled into the optical waveguides (320, 330) and is converted into heat on the basis of an attenuation of the optical waveguides (320, 330),
wherein an attenuation of the optical waveguides (320, 330) being set such that at least part of the coupled-in energy of the electromagnetic waves, in particular light, is converted into heat, in order to heat up the rotor blade (200).

2. Wind turbine rotor blade (200) according to Claim 1,
the heating unit (300) having at least one emitter or a coupling-in unit (310) for providing and/or coupling in electromagnetic waves, in particular light, for the optical waveguides (320, 330).

3. Wind turbine rotor blade according to one of Claims 1 to 2,
the at least one heating unit (300) being integrated in the rotor blade (200) or attached to the rotor blade (200).

4. Wind turbine rotor blade according to one of Claims 1 to 3,
the heating unit (350) having at least one heating mat (350), in which at least one optical waveguide (320, 330) is provided.

5. Wind turbine rotor blade according to one of Claims 1 to 4, with
a rotor blade tip (210) and a rotor blade root (220),
at least one measuring instrument unit (400) for carrying out measurements and an energy transmission unit (600) for supplying energy to the at least one measuring instrument unit (400),
the energy supply unit (600) having a plurality of optical waveguides (320, 330) for transmitting the energy to the at least one measuring instrument unit (400).

6. Wind turbine rotor blade according to Claim 5,
a coupling-in unit (600) being provided in the region of the rotor blade root (220) and intended for the conversion of electrical energy into optical energy, the optical energy being coupled into at least one optical waveguide (640, 641),
the measuring instrument units (400) being designed for converting optical energy that is coupled in by way of the optical waveguides (640, 641) into electrical energy.

7. Wind turbine rotor blade according to Claim 5 or 6,
the measuring instrument units (400) respectively having at least one sensor (420) for measuring physical variables and a transmitter (430), which is suitable for converting the output signals of the sensor (420) into optical signals and transmitting them by way of the optical waveguides (640, 641).

8. Wind turbine, with
at least one rotor blade according to one of Claims 5 to 7 and
an evaluation unit (620) for evaluating the received signals of the measuring instrument units (400).

9. Wind turbine according to Claim 8, also with
a central control unit (500), which is designed to intervene in the operation of the wind turbine on the basis of the signals of the at least one measuring instrument unit (400) that are evaluated by the evaluation unit (620).

10. Wind turbine, with
at least one wind turbine rotor blade according to one of Claims 1 to 7.

11. Heating unit for a wind turbine rotor blade for heating at least a portion of the rotor blade, with
at least one optical waveguide (320, 330) as a heating element when energy in the form of electromagnetic waves is coupled into the at least one optical waveguide (320, 330) and is converted into heat on the basis of an attenuation of the optical waveguides (320, 330),
wherein an attenuation of the optical waveguides (320, 330) being set such that at least part of the coupled-in energy of the electromagnetic waves, in particular light, is converted into heat, in order to heat up the rotor blade (200).

12. Use of optical waveguides as a heating element in a heating unit for heating a wind turbine rotor blade.

13. Method for heating a wind turbine rotor blade that has at least one optical waveguide (320, 330), with the steps of:
coupling in energy in the form of electromagnetic waves or beams in the at least one optical waveguide (320, 330), the electromagnetic waves being converted into heat on the basis of an attenuation in the optical waveguide (320, 330).

## Revendications

1. Pale de rotor d'éolienne (200), avec
au moins une unité de chauffage (300) pour le chauffage d'au moins une section de la pale de rotor (200),
dans laquelle l'unité de chauffage (300) présente au moins un guide d'ondes optiques (320, 330) en tant qu'élément de chauffage, lorsque de l'énergie est injectée sous forme d'ondes électromagnétiques ou de rayons dans le guide d'ondes optiques (320, 330) et est convertie en chaleur en raison d'une atténuation des guides d'ondes optiques (320, 330),
dans laquelle une atténuation des guides d'ondes optiques (320, 330) est réglée de sorte qu'au moins une partie de l'énergie injectée des ondes électromagnétiques, en particulier de la lumière, soit convertie en chaleur, pour chauffer la pale de rotor (200).

2. Pale de rotor d'éolienne (200) selon la revendication 1, dans laquelle
l'unité de chauffage (300) présente au moins un émetteur ou une unité d'injection (310) pour la mise à disposition et/ou l'injection d'ondes électromagnétiques, en particulier de la lumière, pour les guides d'ondes optiques (320, 330).

3. Pale de rotor d'éolienne selon l'une quelconque des revendications 1 à 2, dans laquelle
l'au moins une unité de chauffage (300) est intégrée dans la pale de rotor (200) ou est appliquée sur la pale de rotor (200).

4. Pale de rotor d'éolienne selon l'une quelconque des revendications 1 à 3, dans laquelle
l'unité de chauffage (350) présente au moins un tapis chauffant (350), dans lequel au moins un guide d'ondes optiques (320, 330) est prévu.

5. Pale de rotor d'éolienne selon l'une quelconque des revendications 1 à 4, avec
une pointe de pale de rotor (210) et une racine de pale de rotor (220),
au moins une unité de technique de mesure (400) pour la réalisation de mesures, et
une unité de transmission d'énergie (600) pour l'alimentation en énergie de l'au moins une unité de technique de mesure (400),
dans laquelle l'unité d'alimentation en énergie (600) présente une pluralité de guides d'ondes optiques (320, 330) pour la transmission de l'énergie à l'au moins une unité de technique de mesure (400).

6. Pale de rotor d'éolienne selon la revendication 5, dans laquelle
une unité d'injection (600) est prévue dans la zone de la racine de pale de rotor (220) et est prévue pour la conversion d'énergie électrique en énergie optique, dans laquelle l'énergie optique est injectée dans au moins un guide d'ondes optiques (640, 641),
dans laquelle les unités de technique de mesure (400) sont configurées pour convertir l'énergie optique injectée par le biais des guides d'ondes optiques (640, 641) en énergie électrique.

7. Pale de rotor d'éolienne selon la revendication 5 ou 6, dans laquelle
les unités de technique de mesure (400) présentent respectivement au moins un capteur (420) pour la mesure de grandeurs physiques et un émetteur (430), qui convient pour convertir les signaux de sortie du capteur (420) en signaux optiques et pour les transmettre par le biais des guides d'ondes optiques (640, 641).

8. Éolienne, avec
au moins une pale de rotor selon l'une quelconque des revendications 5 à 7, et
une unité d'évaluation (620) pour l'évaluation des signaux reçus des unités de technique de mesure (400).

9. Éolienne selon la revendication 8, en outre avec
une unité de commande centrale (500), qui est configurée pour intervenir dans le fonctionnement de l'éolienne en fonction des signaux évalués par l'unité d'évaluation (620) de l'au moins une unité de technique de mesure (400).

10. Éolienne, avec
au moins une pale de rotor d'éolienne selon l'une quelconque des revendications 1 à 7.

11. Unité de chauffage pour une pale de rotor d'éolienne pour le chauffage d'au moins une section de la pale de rotor, avec
au moins un guide d'ondes optiques (320, 330) en tant qu'élément de chauffage, lorsque de l'énergie est injectée sous forme d'ondes électromagnétiques dans l'au moins un guide d'ondes optiques (320, 330) et est convertie en chaleur en raison d'une atténuation des guides d'ondes optiques (320, 330),
dans laquelle une atténuation des guides d'ondes optiques (320, 330) est réglée de sorte qu'au moins une partie de l'énergie injectée des ondes électromagnétiques, en particulier de la lumière, soit convertie en chaleur, pour chauffer la pale de rotor (200).

12. Utilisation de guides d'ondes optiques en tant qu'élément de chauffage dans une unité de chauffage pour chauffer une pale de rotor d'éolienne.

13. Procédé de chauffage d'une pale de rotor d'éolienne, qui présente au moins un guide d'ondes optiques (320, 330), avec les étapes de :
injection d'énergie sous forme d'ondes électromagnétiques ou de rayons dans l'au moins un guide d'ondes optiques (320, 330), dans lequel, en raison d'une atténuation dans le guide d'ondes optiques (320, 330), les ondes électromagnétiques sont converties en chaleur.
